(19) Europäisches Patentamt

European Patent Office

Office européen des brevets

(11) **EP 4 074 564 B1**

(12) **EUROPÄISCHE PATENTSCHRIFT**

(45) Veröffentlichungstag und Bekanntmachung des Hinweises auf die Patenterteilung:
**04.10.2023  Patentblatt 2023/40**

(21) Anmeldenummer: **22166674.6**

(22) Anmeldetag: **05.04.2022**

(51) Internationale Patentklassifikation (IPC):
**B60W 30/14** *(2006.01)*  **B60W 50/00** *(2006.01)*
**B60W 30/19** *(2012.01)*  **F16H 61/02** *(2006.01)*

(52) Gemeinsame Patentklassifikation (CPC):
**F16H 61/0213; B60W 30/143; B60W 30/19; B60W 50/0097;** F16H 2061/0015; F16H 2061/0216

(54) **VORRICHTUNG UND VERFAHREN ZUR BESTIMMUNG EINES OPTIMALEN GESCHWINDIGKEITS- UND GANGSCHALTVERLAUFS EINES KRAFTFAHRZEUGS**

DEVICE AND METHOD FOR DETERMINING AN OPTIMAL SPEED AND SPEED SHIFT OF A MOTOR VEHICLE

DISPOSITIF ET PROCÉDÉ DE DÉTERMINATION D'UNE COURBE OPTIMALE DE VITESSE ET DE CHANGEMENT DE VITESSE D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2021   DE 102021108521**

(43) Veröffentlichungstag der Anmeldung:
**19.10.2022   Patentblatt 2022/42**

(73) Patentinhaber: **MAN Truck & Bus SE**
**80995 München (DE)**

(72) Erfinder:
• **Hönle, Jochen**
  **80995 München (DE)**
• **Grünbeck, Thomas**
  **80995 München (DE)**
• **Zoth, Daniel**
  **80995 München (DE)**
• **Verbücheln, Felix**
  **80995 München (DE)**
• **Heinrich, Ingo**
  **80995 München (DE)**
• **Horn, Christian**
  **80995 München (DE)**

(74) Vertreter: **v. Bezold & Partner Patentanwälte - PartG mbB**
**Ridlerstraße 57**
**80339 München (DE)**

(56) Entgegenhaltungen:
**EP-A1- 3 127 769      DE-A1-102014 207 684**
**DE-A1-102015 015 923   US-A1- 2013 297 174**

**Beschreibung**

Die Erfindung betrifft eine Vorrichtung und ein Verfahren zur Bestimmung eines auf einem vorausliegenden Streckenabschnitt automatisiert einzustellenden und hinsichtlich vorgegebener Zielkriterien optimalen Geschwindigkeits- und zugehörigen Gangschaltverlaufs eines Kraftfahrzeugs.

In den letzten Jahren haben Assistenzsysteme in Fahrzeugen vermehrt Einzug gehalten, um insbesondere Sicherheit, Effizienz und Komfort zu erhöhen. Aus der Praxis ist bekannt, dass insbesondere bei Fahrzeugen, die einen hohen Grad der Automatisierung ermöglichen, z. B. bei Fahrzeugen mit automatisierter Getriebesteuerung, automatisierter Längsdynamikregelung bei aktivem Tempomat, für die Steuerverfahren vermehrt Online-Optimierungsverfahren bzw. Online-Optimierer unter Ausnutzung vorausschauender Informationen zum Einsatz kommen.

Primäres Ziel des Optimierers ist die Berechnung von Stellgrößen (Steuereingriffen), um bestimmte Zustandsgrößen bzw. Systemzustände des Fahrzeugs wie z. B. die Fahrzeuggeschwindigkeit und den zugehörigen Gangschaltverlauf stets in ein Optimum zu überführen. Das Optimum für einen prädizierten Zustandsverlauf ist durch Zielkriterien charakterisiert. Zielkriterien sind beispielsweise die Maximierung des Kraftstoffeinsparpotentials oder die Optimierung des Fahrkomforts unter Vorgabe weiterer Randbedingungen, z. B. einer Maximalzeit für das Durchfahren einer Fahrstrecke.

In Verbindung mit dem Transport von Gütern wird als bedeutende Aufgabe eine Reduzierung des Kraftstoffverbrauchs und damit der Schadstoffemissionen angesehen. Dazu kann insbesondere eine automatisierte Längsregelung mit einer aus Verbrauchsgesichtspunkten optimalen Fahrgeschwindigkeit und einer automatisierten Gangwahl beitragen.

Zur Bestimmung eines auf einem vorausliegenden Streckenabschnitt automatisiert einzustellenden und hinsichtlich vorgegebener Zielkriterien optimalen Geschwindigkeits- und zugehörigen Gangschaltverlaufs ist beispielsweise aus dem Stand der Technik bekannt, in einem ersten Schritt Zustandsübergänge für einen definierten Geschwindigkeits- und Gangbereich für den verfügbaren Horizont in einer Matrix zu berechnen. In einem zweiten Schritt wird mit Hilfe eines Optimierers die kostenminimale Trajektorie, d. h. der kostenminimale Geschwindigkeits- und zugehörige Gangschaltverlauf gesucht, z. B. mittels des Dijkstra-Algorithmus. Aus der Offenlegungsschrift DE 10 2012 013 695 A1 ist ein derartiger Ansatz zur Schaltungssteuerung eines Automatisierten-Schalt-Getriebes (ASG) eines Kraftfahrzeugs bekannt. Für die Berechnung der Zustandsübergänge wird eine Kräftebilanz am Fahrzeug angewendet. In diese Kräftebilanz gehen unter anderem der Fahrwiderstand, die Fahrzeugmasse, die Zugkraft und die Bremskraft etc. ein. Anhand des Kräftegleichgewichts kann dann über die Masse eine Geschwindigkeitsänderung des Fahrzeugs berechnet werden. Nachteilig an diesem Ansatz ist, dass er hohe Rechenaufwände und/oder Speicherkapazitäten erfordert, z. B. aufgrund der nicht linearen Bewegungsgleichungen, die sich aus der Berücksichtigung des Kräftegleichgewichts ergeben.

Es ist somit eine Aufgabe der Erfindung, eine verbesserte Technik zur Bestimmung eines auf einem vorausliegenden Streckenabschnitt automatisiert einzustellenden und hinsichtlich vorgegebener Zielkriterien optimalen Geschwindigkeits- und zugehörigen Gangschaltverlaufs eines Kraftfahrzeugs bereitzustellen, mit der Nachteile herkömmlicher Techniken vermieden werden können. Die Aufgabe der Erfindung ist es insbesondere, eine schnellere und/oder weniger Hardware-Ressourcen benötigende Technik bereitzustellen, um einen hinsichtlich vorgegebener Zielkriterien optimalen Geschwindigkeits- und zugehörigen Gangschaltverlauf zu bestimmen.

Diese Aufgaben werden durch Vorrichtungen und Verfahren mit den Merkmalen der unabhängigen Ansprüche gelöst. Vorteilhafte Weiterbildungen sind in den abhängigen Ansprüchen und der Beschreibung angegeben.

Gemäß einem ersten allgemeinen Gesichtspunkt wird ein Verfahren zur Bestimmung eines auf einem vorausliegenden Streckenabschnitt automatisiert einzustellenden und hinsichtlich vorgegebener Zielkriterien optimalen Gang-/Geschwindigkeitsverlaufs (Geschwindigkeits- und zugehörigen Gangschaltverlaufs) eines Kraftfahrzeugs bereitgestellt. Der bestimmte Geschwindigkeits- und zugehörige Gangschaltverlauf entlang eines vorausliegenden Streckenabschnitts kann zu einer automatisierten Längsführung eines Kraftfahrzeugs mit einem Automatisierten-Schalt-Getriebe genutzt werden.

Der vorausliegende Streckenabschnitt entspricht einer definierten vorausliegenden Wegstrecke, die beispielsweise eine Länge von wenigen Kilometern aufweist, und wird auch als Horizont (Planungshorizont, Prädiktionshorizont oder Vorhersagehorizont) bezeichnet. Das Verfahren umfasst in an sich bekannter Weise die folgenden Schritte:

Die Bestimmung eines diskreten Suchraums, der mögliche Verläufe von Fahrzuständen des Kraftfahrzeugs entlang des vorausliegenden Streckenabschnitts angibt. Ein Fahrzustand ist hierbei durch eine Geschwindigkeit und den zugehörigen Gang des Kraftfahrzeugs festgelegt. Anders ausgedrückt stellen die Fahrzustände die Knoten (Zustandspunkte) eines diskretisierten Suchraums dar. Es wird somit eine Geschwindigkeitsdiskretisierung für alle möglichen Geschwindigkeitsverläufe vorgegeben. Neben der geschwindigkeitsdiskreten Auftragung umfasst der Suchraum noch die möglichen Gangstufen für jeden Geschwindigkeitswert. Bei der Bestimmung der möglichen Fahrzustände können unterschiedliche Randbedingungen wie minimale und/oder maximal erlaubte Geschwindigkeit entlang des vorausliegenden Streckenabschnitts berücksichtigt werden. Ferner wird das Höhenprofil berücksichtigt, derart, dass den Fahrzuständen jeweils eine Höheninformation der Fahrtstrecke zugeordnet ist gemäß dem Höhenprofil der vorausliegenden Fahrtstrecke.

Das Verfahren umfasst ferner die Bestimmung von Zustandswechselkosten für die möglichen Verläufe von Fahrzuständen, d. h. die Zustandswechselkosten für mögliche Fahrzustandsübergänge innerhalb des Suchraums bzw. entlang des vorausliegenden Streckenabschnitts. Es werden somit Kosten für sämtliche mögliche Zustandsübergänge für den vorausliegenden Streckenabschnitt berechnet. Die Kosten sind in Abhängigkeit von den vorgegebenen Zielkriterien definiert. Ist lediglich beispielhaft ein Zielkriterium die Kraftstoffeffizienz, erzeugen Fahrzustandsübergänge, die einen vergleichsweise hohen Kraftstoffverbrauch erzeugen, entsprechend vergleichsweise hohe Kosten. Zustandswechselkosten können daher auch als Zustandsübergangskosten bezeichnet werden.

Das Verfahren umfasst die Bestimmung eines hinsichtlich der bestimmten Zustandswechselkosten optimalen Verlaufs der Fahrzustände innerhalb des bestimmten Suchraums für den vorausliegenden Streckenabschnitt. Beispielsweise sucht ein Optimierer den Pfad (auch als Trajektorie bezeichnet) der geringsten Zustandsübergangskosten durch das Netzwerk aus Knoten (Fahrzuständen) innerhalb des Suchraums, z. B. mittels des Dijkstra-Algorithmus. Der optimale Pfad entspricht dann dem hinsichtlich der Zielkriterien optimalen Gang-/Geschwindigkeitsverlauf für den vorausliegenden Streckenabschnitt.

Der erfindungsgemäße Ansatz zeichnet sich nun dadurch aus, dass für jeden Fahrzustand innerhalb des Suchraums eine kinetische Energie des Kraftfahrzeugs bestimmt wird und dass jeweils eine Energieänderung für die möglichen Fahrzustandsübergänge innerhalb des Suchraums bestimmt wird. Die Energieänderung entspricht einer Energieänderung des Kraftfahrzeugs bei einem Wechsel zwischen zwei Fahrzuständen, somit der Energieänderung bei einem Übergang von einem Fahrzustand (mit entsprechender zugeordneter Geschwindigkeit und Gangstufe) zu einem darauffolgenden möglichen Fahrzustand (mit ebenfalls entsprechender zugeordneter Geschwindigkeit und Gangstufe) des Suchraums entlang der Fahrtstrecke. Die Zustandswechselkosten werden ferner in Abhängigkeit von den bestimmten Energieänderungen bestimmt.

Die Berechnung der Zustandswechselkosten in Abhängigkeit von den bestimmten Energieänderungen anstelle einer Berechnung über ein Kräftegleichgewicht bietet den Vorzug, dass eine Energieänderung des Fahrzeugs einen entsprechenden Betrag x kostet. Eine entsprechende Kennlinie kann im Fahrzeug hinterlegt sein.

Dies hat den Vorteil, dass die Energieänderung bereits Änderungen sowohl der potentiellen als auch der kinetischen Energie beinhaltet und hier nicht mehr beide Größen separat betrachtet werden müssen. Eine Geschwindigkeitsänderung oder Höhenänderung beeinflusst zwar die Berechnung der Energieänderung. Nach deren Berechnung spielt es jedoch für die Berechnung der Zustandswechselkosten keine Rolle mehr, ob die Energieänderung aufgrund von Geschwindigkeitsänderung, Fahrwiderstand oder Höhenänderung zustande kommt. Entsprechend müssen dadurch nicht Zustandswechselkosten für alle Geschwindigkeitsänderungen für unterschiedliche Steigungen berechnet werden, wodurch sich die erforderlichen Rechenschritte bzw. die Anzahl an Berechnungen stark reduzieren.

Die Verwendung der Energieänderung zur Bestimmung der Zustandswechselkosten anstatt von nicht linearen Bewegungsgleichungen, die sich aus der Berücksichtigung des Kräftegleichgewichts ergeben, bietet ferner den Vorteil, dass die Zustandswechselkosten für die Energieänderung in Abhängigkeit von der Energieänderung linearisiert werden können. Dadurch müssen nicht sämtliche Zustandswechselkosten (nichtlinear) berechnet werden, sondern können über eine Linearisierung abgeschätzt werden. Dies spart einen beträchtlichen Teil an Rechenaufwand. Somit wird ein Einsatz des Verfahrens in einem Steuergerät mit begrenzten Rechenressourcen bzw. in einem Embedded System besonders vorteilhaft ermöglicht.

In einer bevorzugten Ausführungsform ist vorgesehen, dass die Bestimmung der Zustandswechselkosten in Abhängigkeit von den bestimmten Energieänderungen durch Schätzung anhand eines linearen Modells erfolgt. Das Modell ordnet Energieänderungen Verbrauchskennwerte eines Antriebsmotors des Kraftfahrzeugs zu oder direkt eine Kostengröße zu. Dies ermöglicht eine besonders schnelle und ressourcenschonende Bestimmung der Zustandswechselkosten.

Bei einem kraftstoffbetriebenen Antriebsmotor (Verbrennungsmotor) wird zur Berechnung der Zustandswechselkosten (unter der Annahme, dass ein Zielkriterium für die Optimierung die Kraftstoffeffizienz ist) die Menge des benötigten Kraftstoffs für die benötigte Energieänderung von einem ersten Zustand in einen zweiten Zustand (Zustandswechsel) berechnet oder allgemein für sämtliche möglichen Zustandsübergänge. Die vorstehend erwähnte Bestimmung der Zustandswechselkosten in Abhängigkeit von den bestimmten Energieänderungen kann in einer Ausführungsform umfassen, dass aus der bestimmten Energieänderung für einen Zustand mithilfe der gangabhängigen Übersetzung ein Motormoment und eine Motordrehzahl errechnet werden, welche über ein lineares Modell des Verbrauchskennfeldes einem Kraftstoffmassenstrom zugeordnet sind. Mit anderen Worten wird eine Linearisierung des Kraftstoffmassenstroms verwendet, um die Kosten für die Energieänderungen bei einem Zustandswechsel zu bestimmen. Beispielsweise kann eine kraftstoffmassenstrombasierte Verbrauchskennlinie pro Drehzahl über das Motormoment verwendet werden bzw. ein entsprechendes lineares Modell pro Drehzahl zur Approximation dieser Verbrauchskennlinie.

Aus der Praxis ist bekannt, für eine Berechnung des Kraftstoffverbrauchs das sog. be-Kennfeld (sog. Muscheldiagramm) des Verbrennungsmotors zu verwenden. Dieses ist jedoch stark nicht-linear und müsste so stets in jeder Berechnung aufwändig interpoliert werden. Derartige aufwändige Kennfeldinterpolationen können vorliegend durch Verwenden eines linearen Modells des Verbrauchskennfeldes auf Basis des Kraftstoffmassenstroms vermieden werden.

Unter einem linearen Modell des Verbrauchskennfelds wird eine Approximation mittels eines linearen Modells des Verbrauchskennfelds verstanden, wobei das Verbrauchskennfeld durch eine oder mehrere Geraden und/oder eine oder mehrere Steigungswerte von Geraden approximiert ist.

Eine besonders vorteilhafte Variante sieht hierbei vor, dass das Verbrauchskennfeld durch mindestens eine hinterlegte Steigung pro Drehzahl beschrieben ist, die eine Linearisierung des Kraftstoffmassenstroms über das Drehmoment angibt. Entsprechend kann das Verbrauchskennfeld in besonders kompakter Form im Kraftfahrzeug, vorzugsweise in einem Steuergerät, hinterlegt werden.

Zur Erhöhung der Genauigkeit der Approximation des Verbrauchskennfeldes sieht eine weitere Ausführungsvariante vor, dass das lineare Modell des Verbrauchskennfeldes zwei hinterlegte Steigungen pro Drehzahl umfasst oder durch zwei solche Steigungen beschrieben ist, die eine Linearisierung des Kraftstoffmassenstroms pro Drehzahl über das Drehmoment angeben. Die erste Steigung kann einen ersten Abschnitt der Kennlinie bis zu einem Stützmoment linear annähern und die zweite Steigung kann einen zweiten Abschnitt der Kennlinie, ab dem Stützmoment, linear annähern. Hierdurch kann die kraftstoffmassenstrombasierte Verbrauchskennlinie, die in der Regel eine konvexe Funktion ist, genauer angenähert werden.

Gemäß einem weiteren Aspekt kann auch ein Verbrauchskennfeld einer elektrischen Traktionsmaschine, bei einem Kraftfahrzeug, das zumindest zum Teil elektrisch angetrieben ist, ebenfalls durch ein lineares Modell approximiert werden.

In einer weiteren Ausführungsform umfasst die Bestimmung der Energieänderung für die möglichen Fahrzustandsübergänge das Angeben einer Energiebilanz für den jeweiligen Fahrzustandsübergang. Die Energiebilanz umfasst hierbei Änderungen in der potentiellen Energie des Kraftfahrzeugs, die Höhenunterschiede innerhalb des vorausliegenden Streckenabschnitts berücksichtigt, und Änderungen in der kinetischen Energie des Kraftfahrzeugs. Der Höhenunterschied ergibt sich aus dem Höhenprofil des vorausliegenden Streckenabschnitts und gibt die Höhenänderung des Kraftfahrzeugs bei einem Fahrzustandsübergang an.

Wie vorstehend bereits festgestellt wurde, hat dies den Vorteil, dass die Energieänderung bereits Änderungen sowohl der potentiellen als auch der kinetischen Energie beinhaltet und hier für die nachfolgende Kostenberechnung nicht mehr beide Größen separat betrachtet werden müssen, wodurch sich die erforderlichen Rechenschritte stark reduzieren.

In einer vorteilhaften Ausführungsvariante kann die Energiebilanz ferner einen luftwiderstands- und/oder rollwiderstandsabhängigen (Fahrwiderstand) Energieanteil umfassen. Mit anderen Worten umfasst die Berechnung der Energieänderung bei einem Fahrzustandsübergang die Berechnung der dabei entstehenden luftwiderstands- und/oder rollwiderstandsabhängigen Energie des Kraftfahrzeugs, die während der Dauer und Art des Fahrzustandsübergangs aufzubringen ist. Durch die Berücksichtigung dieser Verlustenergien kann die Genauigkeit der Berechnung der Zustandswechselkosten erhöht werden.

Die vorgegebenen Zielkriterien können ein Zielkriterium umfassen, das ein Maß für eine Kraftstoffeffizienz des Kraftfahrzeugs angibt, so dass eine Optimierung in Hinsicht auf den Kraftstoffverbrauch erfolgt. Ferner können weitere Zielkriterien verwendet werden, beispielsweise ein Zielkriterium, das ein Maß für eine Fahrbarkeit (Fahrkomfort) angibt, z. B. durch die Bewertung der Anzahl an Gangschaltungen. In der Regel sind weniger Schaltungen präferiert aus Fahrbarkeitsgesichtspunkten, so dass Trajektorien mit vielen Schaltvorgängen höhere Kosten zugeordnet werden. Ein weiteres Zielkriterium kann ein Maß für eine Einhaltung einer Sollgeschwindigkeit oder Setzgeschwindigkeit eines Tempopiloten angeben, so dass Abweichungen von einer Sollgeschwindigkeit oder Setzgeschwindigkeit mit höheren Kosten verbunden sind.

Beispielsweise kann die Bestimmung der Zustandswechselkosten in Abhängigkeit von den bestimmten Energieänderungen zumindest einen der folgenden weiteren Kostenanteile umfassen: einen Kostenanteil in Abhängigkeit von einer Anzahl von Schaltvorgängen, einen Kostenanteil für eine Abweichung der Geschwindigkeit von einer Sollgeschwindigkeit und einen Kostenanteil für eine Abweichung der Geschwindigkeit am Ende des vorausliegenden Streckenabschnitts von einer Sollendgeschwindigkeit.

In einer weiteren Ausführungsform ist vorgesehen, dass die Bestimmung der Zustandswechselkosten in Abhängigkeit von den bestimmten Energieänderungen zumindest zum Teil vorab oder zu Fahrtbeginn erfolgt und im Kraftfahrzeug hinterlegt wird. Beispielsweise kann vorgesehen sein, dass das vorgenannte lineare Modell für den Verbrauch bei Start des Kraftfahrzeugs einmal erstellt wird. Dies bietet den Vorteil, dass diese im laufenden Betrieb nicht ständig neu berechnet, sondern nur nachgeschlagen werden müssen. Entsprechend ergeben sich Effizienzvorteile. Beispielsweise kann vorgesehen sein, dass zur Laufzeit dann nur noch die Fahrzustände anhand des jeweils aktuellen vorausliegenden Streckenabschnitts berechnet und anschließend der optimale Pfad dadurch gesucht wird, wobei hierbei die Kosten für die Zustandsübergänge nur in einem Speicher, z. B. einem RAM-Speicher, nachgeschlagen werden.

In einer weiteren Ausführungsform ist vorgesehen, dass für die Gänge nicht alle Zustandsübergänge berechnet werden. Stattdessen wird angenommen, dass ein Gang über Leerlauf geschaltet wird. Beispielsweise werden keine direkten Kosten für Übergang von Gang 16 nach Gang 15 berechnet, sondern die Kosten für Gang 16 nach Leerlauf und die Kosten für Leerlauf nach Gang 15. Dies ermöglicht die Einsparung von sehr vielen Zustandsübergängen.

Entsprechend kann gemäß dieser Ausführungsform der vorstehend beschriebene Schritt der Bestimmung von Zustandswechselkosten für mögliche Fahrzustandsübergänge innerhalb des Suchraums umfassen, dass Zustandswechselkosten für einen Gangwechsel von einem Ausgangsgang in einen neuen Gang berechnet werden, in dem die Zustandswechselkosten für den Übergang vom Ausgangsgang in den Leerlauf und die Zustandswechselkosten vom Leerlauf in den neuen Gang berechnet und summiert werden.

Gemäß einem zweiten allgemeinen Gesichtspunkt wird eine Vorrichtung zur Bestimmung eines auf einem vorausliegenden Streckenabschnitt automatisiert einzustellenden und hinsichtlich vorgegebener Zielkriterien optimalen Geschwindigkeits- und zugehörigen Gangschaltverlaufs eines Kraftfahrzeugs für einen vorausliegenden Streckenabschnitt bereitgestellt. Die Vorrichtung kann ein Steuergerät sein oder als Teilfunktionalität hiervon ausgebildet sein. Die Vorrichtung kann als eingebettetes System (engl. Embedded System) ausgeführt sein.

Die Vorrichtung ist ausgebildet, einen diskreten Suchraum zu bestimmen, der mögliche Verläufe von Fahrzuständen des Kraftfahrzeugs entlang eines vorausliegenden Streckenabschnitts angibt, wobei ein Fahrzustand durch eine Geschwindigkeit und den zugehörigen Gang des Kraftfahrzeugs festgelegt ist; Zustandswechselkosten für mögliche Fahrzustandsübergänge innerhalb des Suchraums zu bestimmen; und einen hinsichtlich der bestimmten Zustandswechselkosten optimalen Verlauf der Fahrzustände innerhalb des bestimmten Suchraums für den vorausliegenden Streckenabschnitt zu bestimmen.

Die Vorrichtung ist ferner ausgebildet ist, für jeden Fahrzustand innerhalb des Suchraums eine kinetische Energie des Kraftfahrzeugs zu bestimmen und jeweils eine Energieänderung für die möglichen Fahrzustandsübergänge innerhalb des Suchraums zu bestimmen. Hierbei gibt die Energieänderung eine Energieänderung des Kraftfahrzeugs bei einem Wechsel zwischen zwei Fahrzuständen an. Die Vorrichtung ist ferner ausgebildet, die Zustandswechselkosten in Abhängigkeit von den bestimmten Energieänderungen zu bestimmen.

Die Vorrichtung kann ausgebildet sein, das Verfahren zur Bestimmung eines auf einem vorausliegenden Streckenabschnitt automatisiert einzustellenden und hinsichtlich vorgegebener Zielkriterien optimalen Geschwindigkeits- und zugehörigen Gangschaltverlaufs eines Kraftfahrzeugs, wie es in diesem Dokument beschrieben ist, durchzuführen. Beispielsweise kann die Vorrichtung, z. B. ein Steuergerät, hierzu programmtechnisch mittels einer entsprechenden Software eingerichtet sein, die Schritte des Verfahren durchzuführen. Zur Vermeidung von Wiederholungen sollen daher rein verfahrensgemäß offenbarte Merkmale auch als vorrichtungsgemäß offenbart gelten und beanspruchbar sein. Insbesondere sollen die im Zusammenhang mit dem Verfahren beschriebenen Merkmale auch die entsprechende Funktion der Vorrichtung beschreiben bzw. als funktionale Merkmale der Vorrichtung offenbart und beanspruchbar sein.

Die Erfindung betrifft ferner ein Kraftfahrzeug, umfassend eine Vorrichtung, wie sie in diesem Dokument beschrieben ist. Das Kraftfahrzeug kann ein Nutzfahrzeug sein. Ein Nutzfahrzeug ist ein Fahrzeug, das durch seine Bauart und Einrichtung zur Beförderung von Personen, zum Transport von Gütern oder zum Ziehen von Anhängerfahrzeugen ausgelegt ist. So kann das Fahrzeug z. B. ein Lastkraftwagen, ein Sattelzug und/oder ein Omnibus sein. Das Nutzfahrzeug kann einen Verbrennungsmotor aufweisen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1    schematisch ein Ablaufdiagramm zur Illustration des Verfahrens gemäß einer Ausführungsform der Erfindung;

Figur 2    schematisch ein Architektur- bzw. Blockschaltbild zur Illustration einer Vorrichtung gemäß einer Ausführungsform der Erfindung sowie ein Nutzfahrzeug mit einer solchen Vorrichtung;

Figur 3    eine Illustration der Ermittlung eines optimalen Geschwindigkeits- und zugehörigen Gangschaltverlaufs innerhalb eines Suchraums;

Figur 4    eine Illustration der Ermittlung eines optimalen Geschwindigkeits- und zugehörigen Gangschaltverlaufs innerhalb eines Suchraums mit zugeordneten Energiezuständen gemäß einer Ausführungsform der Erfindung;

Figur 5    eine Illustration eines linearen Modells des Verbrauchskennfelds auf Basis des Kraftstoffmassenstroms; und

Figur 6    eine Illustration der Bestimmung der Zustandswechselkosten in Abhängigkeit von den bestimmten Energieänderungen anhand eines lineares Modells des Kennfeldes.

Gleiche oder äquivalente Elemente sind in allen Figuren mit denselben Bezugszeichen bezeichnet und zum Teil nicht gesondert beschrieben.

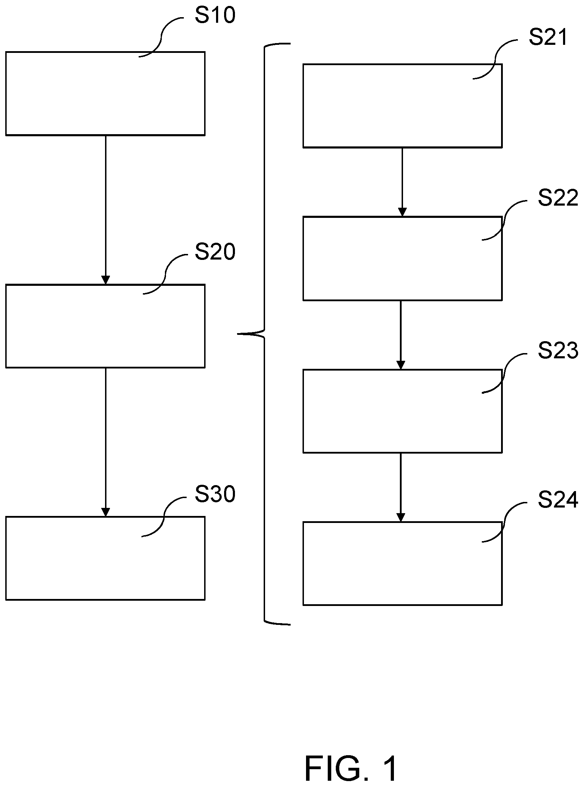

Die Figur 1 zeigt schematisch ein Ablaufdiagramm zur Illustration des Verfahrens gemäß einer Ausführungsform der Erfindung.

Mit dem Verfahren wird ein hinsichtlich vorgegebener Zielkriterien optimaler Gang-/Geschwindigkeitsverlauf eines Kraftfahrzeugs ermittelt, jeweils für einen vorausliegenden Streckenabschnitt (Horizont) mit einem Höhenprofil.

Der vorausliegende Streckenabschnitt entspricht einer definierten vorausliegenden Wegstrecke, die beispielsweise eine Länge von wenigen Kilometern aufweist, und wird auch als Horizont (Planungshorizont, Prädiktionshorizont oder Vorhersagehorizont) bezeichnet. Der vorausliegende Streckenabschnitt (Horizont) kann sich z. B. aus den Streckenprofildaten (Kartendaten) der nächsten x km in Fahrtrichtung des Fahrzeugs ergeben. Hierbei werden Weg- und Höheninformationen benötigt. Des Weiteren können Angaben bzgl. Geschwindigkeitsbegrenzungen, Fahrbahnkrümmung, Infrastrukturelementen (Kreisverkehr) berücksichtigt werden. Der zu bestimmende optimale Gang-/Geschwindigkeitsverlauf kann zur automatisierten Längsführung eines Kraftfahrzeugs mit einem Automatisierten-Schalt-Getriebe genutzt werden.

Das Verfahren umfasst die folgenden Schritte:

Die Bestimmung (Schritt S10) eines diskreten Suchraums 10, der möglichen Verläufe von Fahrzuständen des Kraftfahrzeugs entlang des vorausliegenden Streckenabschnitts angibt.

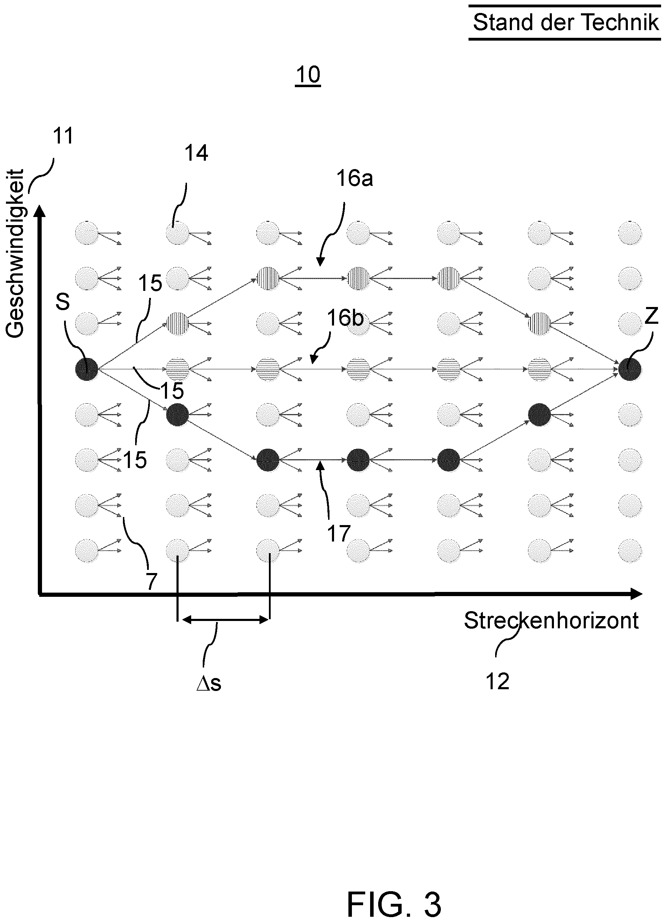

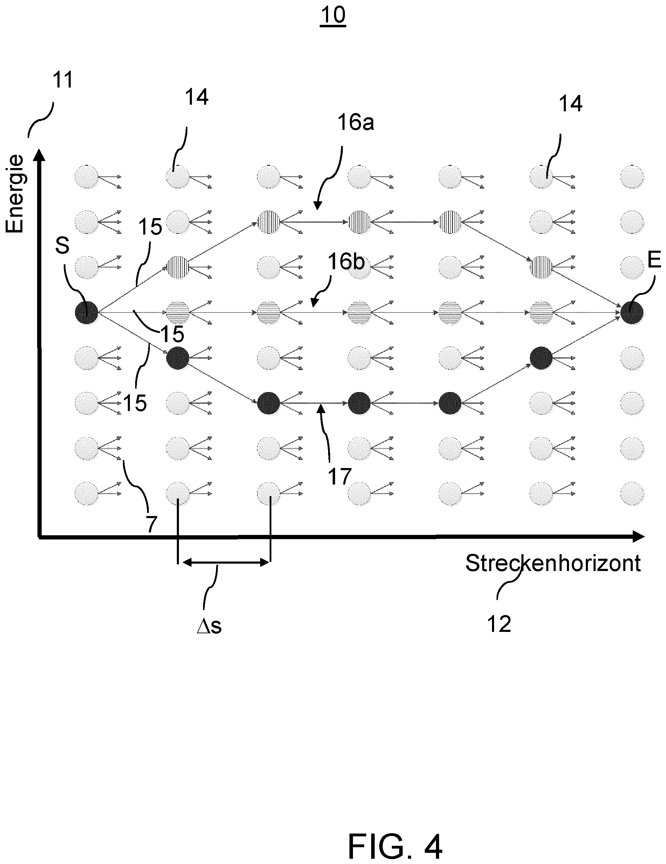

Ein Fahrzustand 14 ist hierbei durch eine Geschwindigkeit und den zugehörigen Gang des Kraftfahrzeugs festgelegt. Anders ausgedrückt stellen die Fahrzustände 14 die Knoten (Zustandspunkte) eines diskretisierten Suchraums 10 dar. Es wird somit eine Geschwindigkeitsdiskretisierung für alle möglichen Geschwindigkeitsverläufe vorgegeben. Bei der Bestimmung der möglichen Fahrzustände können unterschiedliche Randbedingungen wie minimal und/oder maximal erlaubte Geschwindigkeit entlang des vorlausliegenden Streckenabschnitts berücksichtigt werden, so dass der Suchraum entsprechend eingeschränkt wird. Ferner wird das Höhenprofil berücksichtigt, derart, dass den Fahrzuständen jeweils eine Höheninformation der Fahrtstrecke zugeordnet ist gemäß dem Höhenprofil der vorausliegenden Fahrtstrecke. Neben der geschwindigkeitsdiskreten Auftragung umfasst der Suchraum noch die möglichen Gangstufen für jeden Geschwindigkeitswert, d. h., in einer dritten Dimension (nicht in Figur 3 und Figur 4 dargestellt) werden zusätzlich noch die Gänge aufgetragen.

Der Suchraum 10 ist in Richtung der Horizontachse 12 ebenfalls diskretisiert. Die Schrittweite bzw. Abtastrate für die unterschiedlichen Werte der Fahrzustände 14 entspricht einer Weglänge in Richtung des vorlausliegenden Streckenabschnitts und ist mit $\Delta s$ angegeben. Zusammen mit der den Fahrzuständen 14 zugeordneten Geschwindigkeit kann hieraus jeweils auch eine Zeit $\Delta t$ berechnet werden, die eine benötigte Zeitdauer für einen Fahrzustandsübergang angibt.

In Figur 3 sind beispielhaft mögliche Verläufe von Fahrzustandsübergängen (Trajektorien) 16a, 16b und 17 ausgehend von einem Startzustand S gezeigt. Der Zielzustand Z kann, muss aber nicht fest vorgegeben werden.

Das Verfahren umfasst ferner die Bestimmung (Schritt S20) von Zustandswechselkosten für mögliche Fahrzustandsübergänge innerhalb des Suchraums 10. Es werden somit Kosten für sämtliche mögliche Zustandsübergänge für den vorausliegenden Streckenabschnitt berechnet. Die Kosten sind in Abhängigkeit von den vorgegebenen Zielkriterien definiert.

Die Pfeile 15 zwischen den Punkten werden als Fahrzustandsübergänge bezeichnet. Für diese Fahrzustandsübergänge können dann die entstehenden Kosten berechnet werden. Das bedeutet, dass an jedem Pfeil 15 eine Zahl stehen würde, zur Übersichtlichkeit sind diese jetzt nicht dargestellt. In einer dritten Dimension (nicht dargestellt) werden zusätzlich noch die Gänge aufgetragen. Zur besseren Übersichtlichkeit sind nur einige der Fahrzustände und Zustandsübergänge mit Bezugszeichen 14 bzw. 15 gekennzeichnet.

Das Verfahren umfasst ferner die Bestimmung (Schritt S30) eines hinsichtlich der bestimmten Zustandswechselkosten optimalen Verlaufs der Fahrzustände innerhalb des bestimmten Suchraums 10 für den vorausliegenden Streckenabschnitt 12. Beispielsweise sucht ein Optimierer den Pfad (auch als Trajektorie bezeichnet) der geringsten Zustandsübergangskosten durch das Netzwerk aus Knoten (Fahrzuständen) innerhalb des Suchraums, z. B. mittels des Dijkstra-Algorithmus. Der optimale Pfad (hier beispielhaft die Linie 17) entspricht dann dem hinsichtlich der Zielkriterien optimalen Gang-/Geschwindigkeitsverlauf für den vorausliegenden Streckenabschnitt.

Vorstehend wurde bereits ausgeführt, dass bei dem aus dem Stand der Technik bekannten Ansatz für die Berechnung der Zustandsübergänge 15 eine Kräftebilanz am Fahrzeug angewendet wird. In diese Kräftebilanz gehen unter anderem der Fahrwiderstand, die Fahrzeugmasse, die Zugkraft und die Bremskraft etc. ein. Anhand des Kräftegleichgewichts kann dann über die Masse eine Geschwindigkeitsänderung des Fahrzeugs berechnet werden. Nachteilig an diesem Ansatz ist, dass er hohe Rechenaufwände und/oder Speicherkapazitäten erfordert, z. B. aufgrund der nicht linearen Bewegungsgleichungen, die sich aus der Berücksichtigung des Kräftegleichgewichts ergeben. Dort gehen beispielsweise trigonometrische Funktionen ein, die numerisch vergleichsweise aufwändig zu berechnen sind. Denn eine Besonderheit dieses Netzwerks bzw. Suchraums 10 ist, dass die einzelnen Zustände 14 (sowie Zustandsübergänge 15) von der hinterlegten Fahrbahnsteigung (Höhenänderung) abhängig sind. Das bedeutet, dass die Kosten explizit für jeden Wegabschnitt zur Laufzeit gemäß dem aus dem Stand der Technik bekannten und hier nicht verfolgten Ansatz immer neu berechnet werden müssen, was den Großteil der Rechenzeit ausmacht. Entsprechend erfordert die Berechnung der Zustandsübergänge 15 viel mehr Rechenleistung als die Suche des kürzesten Wegs.

Mit dem vorliegenden Ansatz wird stattdessen jedoch eine wesentlich effizientere Bestimmung der Zustandswechselkosten für mögliche Fahrzustandsübergänge innerhalb des Suchraums 10 ermöglicht, was anhand der Schritte S21 bis S24 beschrieben wird.

Gemäß dem hier beschriebenen Ausführungsbeispiel wird für jeden Fahrzustand 14 innerhalb des Suchraums 10 eine kinetische Energie E_kin des Kraftfahrzeugs bestimmt (Schritt S21), was in Figur 4 illustriert ist.

Jedem Fahrzustand 14 innerhalb des Suchraums 10 wird somit eine kinetische Energie zugewiesen werden, die sonst während des Durchlaufs des Algorithmus permanent neu berechnet werden müsste.

Zur Verbesserung der Genauigkeit ist es vorteilhaft, optional zwischen schwerer Masse und träger Masse des Kraftfahrzeugs gemäß nachfolgender Definition zu unterscheiden, da die träge Masse in unterschiedlichen Gängen voneinander abweicht.

$$E_{kin} = \frac{1}{2} v^2 * m_{träge}$$

$$m_{träge} = m_{schwer} + m_{rot}$$

$$m_{rot} = J_{Triebstrang} \, i_{Triebstrang}^2$$

$$i_{Triebstrang} = \frac{i_{Getriebe}}{r_{dyn} i_{Hinterachse}}$$

Vorliegend wird die kinetische Energie anhand der trägen Masse berechnet.

Die träge Masse m_träge ist hier als die Summe von schwerer Masse m_schwer und rotatorischem Massenträgheitsmoment m_rot definiert. Die rotatorische Masse m_rot entspricht dem auf Fahrzeugmasse umgerechneten Trägheitsmoment des gesamten Antriebsstranges. Die Umrechnung des Trägheitsmoments erfolgt anhand der (gangabhängigen) Gesamttriebstrangübersetzung. Diese wiederum kann durch Getriebeübersetzung, Hinterachsübersetzung und dynamischem Reifenhalbmesser ermittelt werden.

Bei der trägen Masse m_träge wird hier somit zusätzlich zur "normalen" Masse m_schwer die Motorträgheit berücksichtigt, die hier in ein Massenäquivalent umgerechnet wird, sprich wieviel kg würde der Motor im jeweiligen Gang wiegen, wenn man eine Energiebilanz/Kräftegleichgewicht fahrzeugseitig aufstellt.

Zwar wird auch bei diesem Ansatz weiterhin eine Geschwindigkeitsdiskretisierung in der Berechnung angewendet, so dass zu Beginn der Berechnung ein Geschwindigkeitsgitter wie in Figur 3 dargestellt aufgespannt wird. Allerdings wird dann die hier hinterlegte Geschwindigkeit v eines bestimmten Fahrzustandes 14 unter Verwendung der Fahrzeugmasse m in kinetische Energie E_kin umgerechnet.

Ferner werden in Schritt S22 Verlustenergien berechnet. Als Verlustenergien werden hier der Luftwiderstand und der Rollwiderstand angenommen, die in an sich bekannter Weise wie folgt berechnet werden können.

$$\Delta E_{Luftwiderstand} = \frac{1}{2} * \rho_{Luft} * c_W * A * v^2 * \Delta s$$

$$\Delta E_{Rollwiderstand} = Rollwiderstandsbeiwert * 9.81 \frac{m}{s^2} * m_{schwer} * \Delta s$$

Der Luftwiderstand ist abhängig von der Geschwindigkeit v. Bei Änderung der Luftdichte, wenn das Fahrzeug seine Höhe über NN signifikant geändert hat, kann die luftwiderstandsbedingte Verlustenergie für jeden Fahrzustand 14 neu berechnet werden.

Die für die jeweiligen Fahrzustände 14 berechneten kinetischen Energien E_kin sowie der berechnete Luftwiderstand können in einem Speicher abgelegt werden, um den Rechenaufwand während der eigentlichen wiederholten Durchführung des Berechnungs-Algorithmus im Fahrbetrieb zu reduzieren. Dies ist vorliegend deshalb vorteilhaft möglich, weil die Kosten nur in Abhängigkeit von den möglichen Energieänderungen berechnet werden, somit in Abhängigkeit von einem Freiheitsgrad. Entsprechend ist der Rechenaufwand reduziert.

Bei dem vorstehend skizzierten Ansatz aus dem Stand der Technik, bei dem die Zustandswechselkosten aufgrund der nicht linearen Bewegungsgleichungen, die sich aus der Berücksichtigung des Kräftegleichgewichts ergeben, berechnet werden, müssen dagegen zwei Freiheitsgrade (Geschwindigkeit und Höhe/Steigung der Strecke) bei der Kostenberechnung berücksichtigt werden, so dass die erforderliche Berechnung wesentlich höher ist bzw. wäre.

Ferner wird die potentielle Energie des Kraftfahrzeugs berechnet. Die potentielle Energie ist abhängig vom Höhenunterschied $\Delta h$ bei einem Fahrzustandsübergang und muss bei jedem Wegschritt neu berechnet werden.

$$\Delta E_{pot} = m_{schwer} * 9.81 \frac{m}{s^2} * \Delta h$$

Um die Zustandswechselkosten von einem Fahrzustand 1 in einen anderen Fahrzustand 2 zu berechnen, wird eine Energiebilanz für den Zustandsübergang 15 aufgestellt. Die Energiebilanz gibt die benötigte Energieänderung $\Delta E$ für einen Zustandsübergang 15 an, d. h. um von einem Knoten 14 im Suchraum 10 zu einem benachbarten Knoten 14 zu wechseln. E_kin_1 und E_kin_2 geben jeweils die kinetische Energie in den Fahrzuständen 1 und 2 an, die zuvor für alle Fahrzustände 14 berechnet wurden (vgl. Figur 4).

$$\Delta E = E_{kin_2} - E_{kin_1} + \Delta E_{pot} + \Delta E_{Rollwiderstand} + \Delta E_{Luftwiderstand}$$

Die Energieänderung $\Delta E$ gibt somit die Energieänderung des Kraftfahrzeugs bei einem Wechsel zwischen zwei Fahrzuständen 14 an. Es werden somit alle Energieänderungen im Suchraum berechnet, um anschließend die summierte Energieänderung entlang der möglichen Pfade durch den Suchraum 10 berechnen zu können.

Anschließend können gemäß Schritt S24 jeweils die Zustandswechselkosten in Abhängigkeit von den bestimmten Energieänderungen bestimmt werden, was nachfolgend erläutert ist.

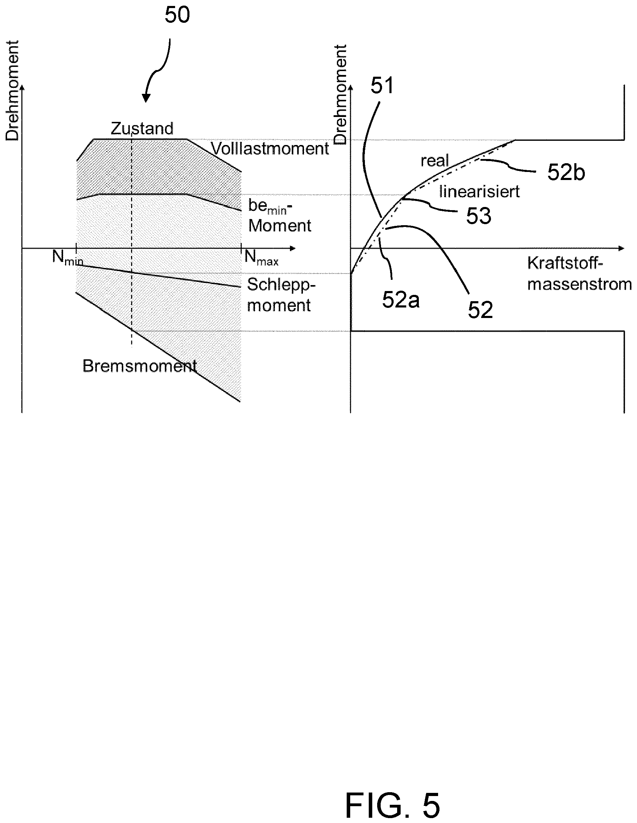

Figur 5 zeigt eine Illustration eines linearen Modells des Verbrauchskennfeldes auf Basis des Kraftstoffmassenstroms.

Aus der Praxis ist bekannt, zur Berechnung des Kraftstoffverbrauchs das sog. be-Kennfeld (sog. Muscheldiagramm) 50 des Verbrennungsmotors zu verwenden, das für eine Motordrehzahl und für ein Motordrehmoment jeweils den spezifischen Kraftstoffverbrauch angibt.

Im dem eingangs beschriebenen nicht erfindungsgemäßen Ansatz, bei dem die Zustandswechselkosten aufgrund der nicht linearen Bewegungsgleichungen, die sich aus der Berücksichtigung des Kräftegleichgewichts ergeben, berechnet werden, kann aus der bei einem Zustandsübergang wirkenden Kraft ein Motordrehmoment und aus der zugeordneten Geschwindigkeit eine Motordrehzahl berechnet werden. Anhand dieser Werte kann durch Interpolation des be-Kennfeldes ein spezifischer Kraftstoffverbrauch und damit die Kraftstoffkosten für den Zustandsübergang berechnet werden. Nachteilig ist hier, dass die Kennfeldspeicherung viel Speicherplatz benötigt und die Interpolation rechenaufwändig ist.

Diese Nachteile können vorliegend dadurch vermieden werden, dass stattdessen aus der bestimmten Energieänderung $\Delta E$ eines Fahrzustandsübergangs, zu dem auch die Geschwindigkeitsinformation v bekannt ist, mithilfe der gangabhängigen Übersetzung ein Motormoment und eine Motordrehzahl errechnet werden, welche wiederrum über ein Verbrauchskennfeld 51 zu einem Kraftstoffmassenstrom und zum Schluss zu einer Kraftstoffmasse führen, welche die Zustandswechselkosten darstellen. Um eine aufwändige Interpolation des Verbrauchskennfeldes 51 zu vermeiden, wird im Voraus ein linearisiertes Modell 52 erstellt, das im rechten Diagramm der Figur 5 dargestellt ist.

Anstatt den spezifischen Kraftstoffverbrauch mittels eines be-Kennfeldes 50 zu ermitteln, wird vorliegend der Kraftstoffmassenstrom 51 als Auftragung verwendet.

Die kraftstoffmassenstrombasierte Verbrauchskennlinie 51 pro Drehzahl über dem Drehmoment ist in der Regel eine konvexe Funktion. Dies wird linearisiert d. h. linear approximiert. Vorliegend gezeigt ist ein durch eine Gerade angenähertes Verbrauchskennfeld 52 des Kraftstoffmassenstroms pro Drehzahl über das Drehmoment. Hierbei ist das approximierte Verbrauchskennfeld 52 durch zwei Geraden 52a und 52b genähert. Ein derartiges lineares Modell des Verbrauchskennfelds 52 wird für alle Zustände hinterlegt.

Die erste Gerade 52a nähert einen ersten Abschnitt der Kennlinie bis zu einer Stützstelle (Drehmomentstützstellet) 53 an. Die zweite Gerade 52b nähert einen zweiten Abschnitt der Kennlinie 51 ab der Stützstelle 53 an. Eine entsprechende lineare Annäherung erfolgt für unterschiedliche Drehzahlen. Für jede dieser Drehzahlen werden nun im Steuergerät vorab die beiden Steigungswerte für die Gerade 52a und 52b jeweils für unterschiedliche Drehzahlen hinterlegt. Entsprechend kann das Verbrauchskennfeld in besonders kompakter Form im Steuergerät hinterlegt werden.

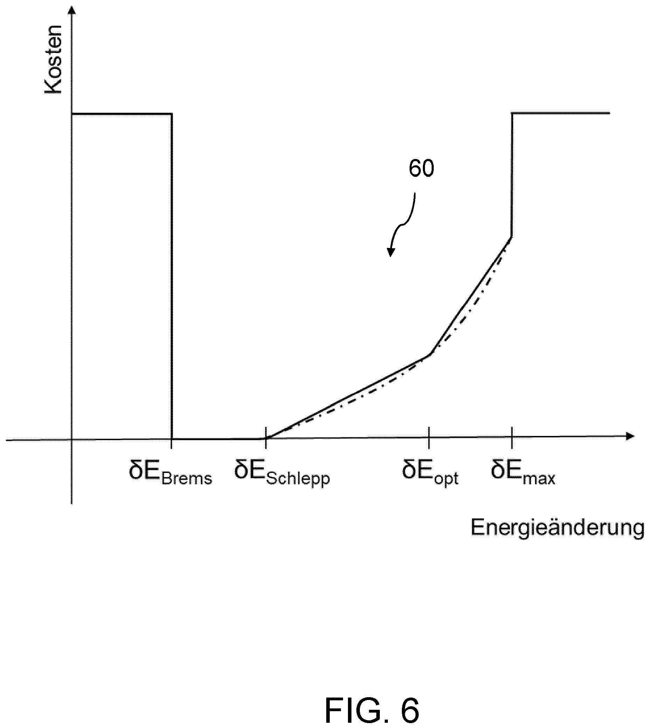

Aus dem auf diese Weise aus der Energieänderung $\Delta E$ bestimmten Kraftstoffmassenstrom kann, multipliziert mit einer Wegeinheit $\Delta s$, die benötigte Kraftstoffmasse für die benötigte Energieänderung zur Durchführung des Zustandsübergangs berechnet werden, so dass aus dieser Linearisierung des Kraftstoffmassenstroms 52 wiederum die Kosten für die Energieänderung linearisiert werden können, was in Figur 6 lediglich beispielhaft anhand der Kennlinie 60 dargestellt ist..

Für jede Energieänderung ∆E können somit die zugeordneten Zustandswechselkosten anhand der Kennlinie 60 ermittelt werden. Die konkreten Werte für die vorstehend beschriebenen Kennlinien können beispielsweise für einen Fahrzeugtyp anhand von Fahrversuchen, Prüfstandmessungen und/oder Modellberechnungen ermittelt werden.

In Schritt S30 kann dann eine Optimierung erfolgen, wobei mit Hilfe eines Optimierers die kostenminimale Trajektorie, d. h. der kostenminimale Geschwindigkeits- und zugehörigen Gangschaltverlauf, durch den Suchraum unter Verwendung der so berechneten Zustandswechselkosten gesucht wird, z. B. mittels des Dijkstra-Algorithmus.

Soll die Optimierung des Gang-/Geschwindigkeitsverlaufs nicht nur in Hinsicht auf Kraftstoffverbrauch erfolgen, sondern ebenso bezüglich einer Abweichung von einer Sollgeschwindigkeit oder Setzgeschwindigkeit (Tempomatgeschwindigkeit) und bezüglich eines Fahrbarkeitskriterium, z. B. festgelegt durch die Anzahl der benötigten Gangschaltungen, kann dies bei der Bestimmung der Zustandswechselkosten berücksichtigt werden.

Beispielsweise kann die Bestimmung der Zustandswechselkosten in Abhängigkeit von den bestimmten Energieänderungen zumindest einen Kostenanteil in Abhängigkeit von einer Anzahl von Schaltvorgängen zur Bewertung einer Fahrbarkeit oder eines Fahrkomforts umfassen. Alternativ oder zusätzlich kann ein Kostenanteil für eine Abweichung der Geschwindigkeit von einer Sollgeschwindigkeit oder Setzgeschwindigkeit zur Vermeidung zu großer Abweichungen von der Sollgeschwindigkeit vorgesehen sein. Alternativ oder zusätzlich kann ein Kostenanteil für eine Abweichung der Geschwindigkeit am Ende des vorausliegenden Streckenabschnitts von einer Sollendgeschwindigkeit vorgesehen sein. Mit Letzterem wird vermieden, dass der Optimierer zum Ende der Trajektorie das Fahrzeug ausrollen lässt, da dies augenscheinlich sehr kraftstoffgünstig ist.

Diese Ziele können über unterschiedliche Gewichtungsfaktoren unterschiedlich berücksichtigt werden. Z. B. kann in einem effizienten Fahrprogramm mehr Gewichtung auf Verbrauch und in einem Performance-Fahrprogramm mehr Gewicht auf Abweichung von der Sollgeschwindigkeit oder Setzgeschwindigkeit gelegt werden.

Ein besonderer Vorzug des vorliegenden Ansatzes ist, dass Kosten für die Energieänderungen schon vorab berechnet werden können und zur Laufzeit nur noch alle Kosten aufaddiert werden müssen. Auf diese Weise kann zur Laufzeit eine erhebliche Reduktion der Rechenaufwände erreicht werden. Bei diesem Ansatz stünde die Funktion zur Bestimmung des optimalen Gang-/Geschwindigkeitsverlaufs nicht direkt nach Aufstarten des Fahrzeugs zur Verfügung, da hier erst die vorstehend erwähnten Berechnungen durchgeführt werden müssen. Da allerdings direkt nach dem Aufstarten das Fahrzeug üblicherweise erst rangiert etc., ist diese Verzögerung in der Praxis akzeptierbar.

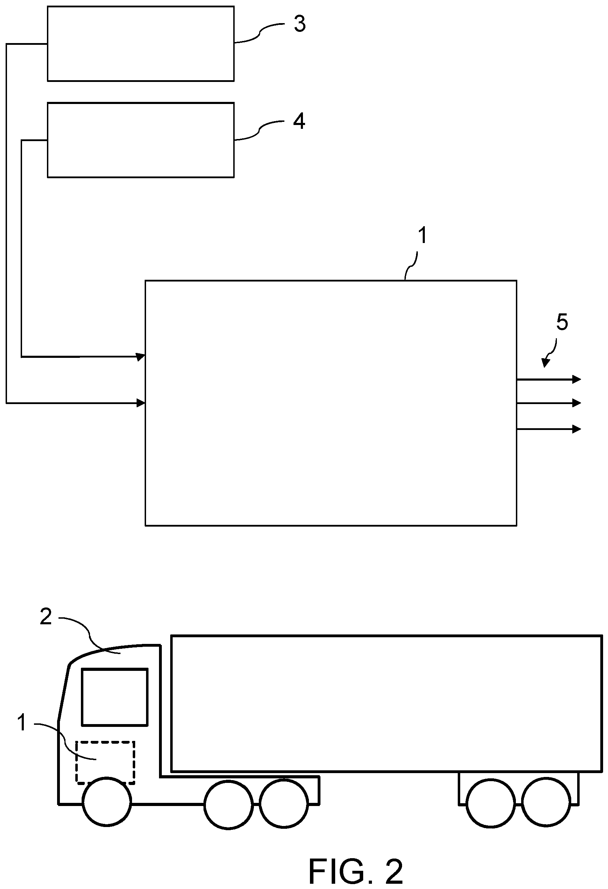

Das vorstehend beschriebene Verfahren kann beispielsweise als Software programmtechnisch in einer Vorrichtung 1, z. B. in einem Steuergerät bzw. in einem sog. eingebetteten System (engl. Embedded System), implementiert sein, was in Figur 2 illustriert ist. Die Vorrichtung kann hierzu eine Recheneinheit (CPU) und einen Speicher zur Speicherung von Kennfelddaten aufweisen. Die Vorrichtung 1 kann in einem Kraftfahrzeug, z. B. einem Nutzfahrzeug 1, verbaut sein. Die Vorrichtung 1 erhält eingangsseitig Streckenprofildaten 4, beispielsweise von einem Navigationsgerät oder einem zentralen Routenplaner. Die Streckenprofildaten 4 legen den vorausliegenden Streckenabschnitt (Horizont) 12 fest und enthalten Weg- und Höheninformationen. Des Weiteren können die Streckenprofildaten 4 Angaben bzgl. Geschwindigkeitsbegrenzungen, Fahrbahnkrümmung, Infrastrukturelementen (Kreisverkehr) enthalten. Die Vorrichtung 1 erhält eingangsseitig ferner aktuelle Fahrzeugdaten, z. B. zur aktuellen Position, Gangstufe und Fahrgeschwindigkeit des Fahrzeugs. Anhand dieser Daten kann zu Beginn der Durchführung des Verfahrens der Ist-Zustand des Kraftfahrzeugs 2 einem der vordefinierten Fahrzustände 14 zugeordnet werden, um den Start-Fahrzustand S festzulegen. Hierbei wird der aktuelle Gang berücksichtigt und der Zustand mit der ähnlichsten Geschwindigkeit gesucht.

Die Vorrichtung 1 ist ausgebildet, den für den vorausliegenden Streckenabschnitt automatisiert einzustellenden und hinsichtlich vorgegebener Zielkriterien optimalen Geschwindigkeits- und zugehörigen Gangschaltverlauf des Kraftfahrzeugs 2 zu berechnen. Die Berechnung erfolgt fortlaufend im Fahrbetrieb, da der vorausliegende Streckenabschnitt fortlaufend rollierend aktualisiert wird. In Abhängigkeit von dem sich ergebenen optimalen Gang-/Geschwindigkeitsverlauf werden dann Gangschalt-, Brems- und Beschleunigungsvorgaben 5 ausgegeben, um den Gang-/Geschwindigkeitsverlauf automatisiert einzustellen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

**Bezugszeichenliste**

| 1 | Vorrichtung |
| 2 | Kraftfahrzeug, z. B. Nutzfahrzeug |
| 3 | Fahrzeugdaten |
| 4 | Streckenprofildaten |
| 5 | Ausgabe von Gangschalt-, Brems- und Beschleunigungsvorgaben |
| 10 | Suchraum |
| 11 | Geschwindigkeitsachse |
| 12 | Streckenhorizontachse |
| 13 | Energieachse |
| 14 | Fahrzustand (Zustandspunkt im Suchraum) |
| 15 | Zustandsübergang |
| 16a, 16b | Nicht optimale Verläufe der Zustandsgröße im Suchraum |
| 17 | Optimaler Verlauf der Zustandsgröße im Suchraum |
| 50 | Verbrauchskennfeld |
| 51 | Verbrauchskennfeld auf Basis Kraftstoffmassenstrom |
| 52 | Lineares Modell des Verbrauchskennfelds auf Basis Kraftstoffmassenstrom |
| 52a | Teilgerade des Verbrauchskennfeldes |
| 52b | Teilgerade des Verbrauchskennfeldes |
| 53 | Stützstelle |
| 60 | Linearisierte Kosten für Energieänderungen |
| S | Startpunkt der Zustandsgröße im Prädiktionshorizont |
| E | Endpunkt der Zustandsgröße |
| $\Delta$s | Abstand der Zustandspunkte entlang des Prädiktionshorizonts im diskretisierten Suchraum (Wegschrittweite) |

**Patentansprüche**

1. Verfahren zur Bestimmung eines auf einem vorausliegenden Streckenabschnitt automatisiert einzustellenden und hinsichtlich vorgegebener Zielkriterien optimalen Geschwindigkeits- und zugehörigen Gangschaltverlaufs eines Kraftfahrzeugs, umfassend die Schritte:

   - Bestimmung (S10) eines diskreten Suchraums (10), der mögliche Verläufe von Fahrzuständen (14) des Kraftfahrzeugs (1) entlang eines vorausliegenden Streckenabschnitts (12) angibt, wobei ein Fahrzustand (14) durch eine Geschwindigkeit und zugehörigem Gang des Kraftfahrzeugs (1) festgelegt ist;
   - Bestimmung (S20) von Zustandswechselkosten für mögliche Fahrzustandsübergänge innerhalb des Suchraums; und
   - Bestimmung (S30) eines hinsichtlich der bestimmten Zustandswechselkosten optimalen Verlaufs (17) der Fahrzustände (14) innerhalb des bestimmten Suchraums (10) für den vorausliegenden Streckenabschnitt (12);
   **dadurch gekennzeichnet, dass**
   - für jeden Fahrzustand (14) innerhalb des Suchraums (10) eine kinetische Energie des Kraftfahrzeugs bestimmt wird (S21); und
   - dass jeweils eine Energieänderung für die möglichen Fahrzustandsübergänge innerhalb des Suchraums bestimmt wird (S23), wobei die Energieänderung eine Energieänderung des Kraftfahrzeugs bei einem Wechsel zwischen zwei Fahrzuständen angibt; und
   - die Zustandswechselkosten in Abhängigkeit von den bestimmten Energieänderungen bestimmt werden (S24).

2. Verfahren nach Anspruch 1, wobei die Bestimmung der Zustandswechselkosten in Abhängigkeit von den bestimmten Energieänderungen durch Schätzung anhand eines linearen Modells (52) erfolgt, das Energieänderungen Verbrauchskennwerte eines Antriebsmotors des Kraftfahrzeugs zuordnet.

3. Verfahren nach Anspruch 1 oder 2, wobei die Bestimmung der Zustandswechselkosten in Abhängigkeit von den bestimmten Energieänderungen umfasst, dass aus der bestimmten Energieänderung mithilfe einer gangabhängigen Übersetzung ein Motormoment und eine Motordrehzahl errechnet werden, welche über ein lineares Modell (52) einem Kraftstoffmassenstrom zugeordnet sind.

4. Verfahren nach Anspruch 3, wobei das lineare Modell durch mindestens eine hinterlegte Steigung pro Drehzahl beschrieben ist, die eine Linearisierung des Kraftstoffmassenstroms über das Drehmoment angibt.

5. Verfahren nach Anspruch 4, wobei das lineare Modell durch zwei hinterlegte Steigungen pro Drehzahl beschrieben ist, die eine Linearisierung des Kraftstoffmassenstroms über das Drehmoment angeben.

6. Verfahren nach einem der vorherigen Ansprüche, wobei die Bestimmung (S23) der Energieänderung für die möglichen Fahrzustandsübergänge das Angeben einer Energiebilanz für den jeweiligen Fahrzustandsübergang (15) umfasst, wobei die Energiebilanz Änderungen in der potentiellen Energie des Kraftfahrzeugs, die Höhenunterschiede innerhalb des vorausliegenden Streckenabschnitts berücksichtigt, und Änderungen in der kinetischen Energie des Kraftfahrzeugs umfasst.

7. Verfahren nach Anspruch 6, wobei die Energiebilanz ferner einen luftwiderstands- und/oder rollwiderstandsabhängigen Energieanteil umfasst.

8. Verfahren nach einem der vorherigen Ansprüche, wobei die vorgegebenen Zielkriterien Zielkriterien umfassen, die ein Maß für eine Kraftstoffeffizienz, ein Maß für eine Fahrbarkeit (Fahrkomfort) und ein Maß für eine Einhaltung einer Sollgeschwindigkeit umfassen.

9. Verfahren nach einem der vorherigen Ansprüche, wobei die Bestimmung der Zustandswechselkosten in Abhängigkeit von den bestimmten Energieänderungen zumindest einen der folgenden weiteren Kostenanteile umfasst:

a) einen Kostenanteil in Abhängigkeit von einer Anzahl von Schaltvorgängen;
b) einen Kostenanteil für eine Abweichung der Geschwindigkeit von einer Sollgeschwindigkeit, und
c) einen Kostenanteil für eine Abweichung der Geschwindigkeit am Ende des vorausliegenden Streckenabschnitts von einer Sollendgeschwindigkeit.

10. Verfahren nach einem der vorherigen Ansprüche, wobei die Bestimmung der Zustandswechselkosten in Abhängigkeit von den bestimmten Energieänderungen zumindest zum Teil vorab oder zu Fahrtbeginn erfolgt und im Kraftfahrzeug hinterlegt wird.

11. Verfahren nach einem der vorherigen Ansprüche, wobei der Schritt der Bestimmung von Zustandswechselkosten für mögliche Fahrzustandsübergänge innerhalb des Suchraums umfasst, dass Zustandswechselkosten für einen Gangwechsel von einem Ausgangsgang in einen neuen Gang berechnet werden, in dem die Zustandswechselkosten für den Übergang vom Ausgangsgang in den Leerlauf und die Zustandswechselkosten vom Leerlauf in den neuen Gang berechnet und summiert werden.

12. Vorrichtung (1) zur Bestimmung eines auf einem vorausliegenden Streckenabschnitt automatisiert einzustellenden und hinsichtlich vorgegebener Zielkriterien optimalen Geschwindigkeits- und zugehörigen Gangschaltverlaufs eines Kraftfahrzeugs für einen vorausliegenden Streckenabschnitt, wobei die Vorrichtung ausgebildet ist,

- einen diskreten Suchraum (10) zu bestimmen, der mögliche Verläufe von Fahrzuständen (14) des Kraftfahrzeugs entlang eines vorausliegenden Streckenabschnitts (12) angibt, wobei ein Fahrzustand (14) durch eine Geschwindigkeit und den zugehörigen Gang des Kraftfahrzeugs festgelegt ist;
- Zustandswechselkosten für mögliche Fahrzustandsübergänge innerhalb des Suchraums zu bestimmen; und
- einen hinsichtlich der bestimmten Zustandswechselkosten optimalen Verlauf (17) der Fahrzustände (14) innerhalb des bestimmten Suchraums (10) für den vorausliegenden Streckenabschnitt (12) zu bestimmen;
**dadurch gekennzeichnet, dass** die Vorrichtung (1) ferner ausgebildet ist,
- für jeden Fahrzustand innerhalb des Suchraums eine kinetische Energie des Kraftfahrzeugs zu bestimmen (S21); und
- jeweils eine Energieänderung für die möglichen Fahrzustandsübergänge innerhalb des Suchraums zu bestimmen (S23), wobei die Energieänderung eine Energieänderung des Kraftfahrzeugs bei einem Wechsel zwischen zwei Fahrzuständen angibt; und
- die Zustandswechselkosten in Abhängigkeit von den bestimmten Energieänderungen zu bestimmen (S24).

13. Kraftfahrzeug, vorzugsweise Nutzfahrzeug (2), umfassend eine Vorrichtung (1) nach Anspruch 12.

**Claims**

1. Method for determining a speed and associated gear shifting profile of a motor vehicle which is to be set automatically on a upcoming route section and is optimal with respect to predetermined target criteria, comprising the steps:

- Determination (S10) of a discrete search space (10) which indicates possible courses of driving states (14) of the motor vehicle (1) along an upcoming route section (12), a driving state (14) being defined by a speed and associated gear of the motor vehicle (1);

- determination (S20) of state change costs for possible driving state transitions within the search space ; and

- determination (S30) of an optimal course (17) of the driving states (14) within the determined search space (10) for the preceding route section (12) with regard to the determined state change costs;
**characterised in**

- **that** for each driving states (14) within the search space (10), a kinetic energy of the motor vehicle is determined (S21); and
- **that** an energy change is determined (S23) for each of the possible driving state transitions within the search space, the energy change indicating an energy change of the motor vehicle when changing between two driving states; and

- the state change costs are determined as a function of the specific energy changes (S24).

2. The method of claim 1, wherein the determination of the state change costs as a function of the determined energy changes is performed by estimation using a linear model (52) that associates energy changes with consumption characteristics of a drive engine of the motor vehicle.

3. A method according to claim 1 or 2, wherein the determination of the state change costs in dependence on the determined energy changes comprises calculating an engine torque and an engine speed from the determined energy change by means of a gear-dependent transmission, which are associated with a fuel mass flow via a linear model (52).

4. The method of claim 3, wherein the linear model is described by at least one stored slope per rotational speed indicating a linearisation of the fuel mass flow over the torque.

5. The method of claim 4, wherein the linear model is described by two stored slopes per rotational speed indicating a linearisation of the fuel mass flow over the torque.

6. A method according to any one of the preceding claims, wherein the determination (S23) of the energy change for the possible driving state transitions comprises indicating an energy balance for the respective driving state transition (15), wherein the energy balance comprises changes in the potential energy of the motor vehicle taking into account altitude differences within the preceding route section and changes in the kinetic energy of the motor vehicle.

7. The method of claim 6, wherein the energy balance further comprises an air resistance and/or rolling resistance dependent energy component.

8. A method according to any one of the preceding claims, wherein the predetermined target criteria comprise target criteria comprising a measure of fuel efficiency, a measure of driveability (ride comfort) and a measure of compliance with a target speed.

9. A method according to any one of the preceding claims, wherein the determination of the state change costs as a function of the determined energy changes comprises at least one of the following further cost components:

a) a cost share depending on a number of switching operations;
(b) a cost share for a deviation of the speed from a target speed, and
(c) a cost share for a deviation of the speed at the end of the preceding route section from a target final speed.

10. Method according to one of the previous claims, wherein the determination of the state change costs as a function of the determined energy changes is carried out at least in part in advance or at the start of the journey and is stored in the motor vehicle.

**11.** A method according to any one of the preceding claims, wherein the step of determining state change costs for possible driving state transitions within the search space comprises calculating state change costs for a gear change from an initial gear to a new gear by calculating and summing the state change costs for the transition from the initial gear to neutral and the state change costs from neutral to the new gear.

**12.** Device (1) for determining a speed and associated gearshift profile of a motor vehicle for an upcoming road section which is to be set automatically and which is optimal with regard to predetermined target criteria, wherein the device is configured,

- to determine a discrete search space (10) indicating possible courses of driving states (14) of the motor vehicle along a preceding route section (12), a driving state (14) being defined by a speed and the associated gear of the motor vehicle;
- determine state change costs for possible driving state transitions within the search space; and
- to determine an optimal course (17) of the driving conditions (14) within the determined search space (10) for the preceding route section (12) with regard to the determined state change costs;
**characterised in that** the device (1) is further configured
- to determine a kinetic energy of the motor vehicle for each driving state within the search space (S21); and
- to determe (S23) an energy change for each of the possible driving state transitions within the search space, the energy change indicating an energy change of the motor vehicle when changing between two driving states; and
- to determine the state change costs as a function of the specific energy changes (S24).

**13.** Motor vehicle, preferably commercial vehicle (2), comprising a device (1) according to claim 12.

**Revendications**

**1.** Procédé pour la détermination d'une courbe optimale, par rapport à des critères cibles prédéterminés, de vitesse et de changement de vitesse associé d'un véhicule automobile, à régler de manière automatisée sur un tronçon de route précédent, comprenant les étapes suivantes :

- déterminer (S10) un espace de recherche discret (10) qui indique des courbes possibles d'états de déplacement (14) du véhicule automobile (1) le long d'un tronçon de route (12) précédent, un état de déplacement (14) étant défini par une vitesse et un changement de vitesse associé du véhicule automobile (1) ;
- déterminer (S20) des coûts de changement d'état pour des transitions d'état de déplacement possibles à l'intérieur de l'espace de recherche ; et
- déterminer (S30) une courbe (17) optimale, par rapport aux coûts de changement d'état déterminés, des états de déplacement (14) à l'intérieur de l'espace de recherche (10) déterminé pour le tronçon de route (12) précédent ; **caractérisé en ce que**,
- pour chaque état de déplacement (14) à l'intérieur de l'espace de recherche (10), une énergie cinétique du véhicule automobile est déterminée (S21) ; et
- **en ce qu'**une variation d'énergie pour les transitions d'état de déplacement possibles à l'intérieur de l'espace de recherche (S23) est respectivement déterminée, la variation d'énergie indiquant une variation d'énergie du véhicule automobile lors d'un changement entre deux états de déplacement ; et
- **en ce que** les coûts de changement d'état sont déterminés en fonction des variations d'énergie déterminées (S24).

**2.** Procédé selon la revendication 1, dans lequel la détermination des coûts de changement d'état en fonction des variations d'énergie déterminées est effectuée par estimation sur la base d'un modèle linéaire (52) qui associe des variations d'énergie à des valeurs caractéristiques de consommation d'un moteur d'entraînement du véhicule automobile.

**3.** Procédé selon la revendication 1 ou 2, dans lequel la détermination des coûts de changement d'état en fonction des variations d'énergie déterminées comprend le calcul, à partir de la variation d'énergie déterminée, à l'aide d'un rapport de transmission dépendant du changement de vitesse, d'un couple moteur et d'une vitesse de rotation du moteur, qui sont associés à un débit massique de carburant par l'intermédiaire d'un modèle linéaire (52).

**4.** Procédé selon la revendication 3, dans lequel le modèle linéaire est décrit par au moins une pente stockée par vitesse de rotation, qui indique une linéarisation du débit massique de carburant en fonction du couple.

5. Procédé selon la revendication 4, dans lequel le modèle linéaire est décrit par deux pentes stockées par vitesse de rotation, lesquelles indiquent une linéarisation du débit massique de carburant en fonction du couple.

6. Procédé selon l'une des revendications précédentes, dans lequel la détermination (S23) de la variation d'énergie pour les transitions d'état de déplacement possibles comprend l'indication d'un bilan énergétique pour la transition d'état de déplacement (15) respective, le bilan énergétique comprenant des variations de l'énergie potentielle du véhicule automobile, qui tiennent compte de différences de hauteur sur le tronçon de route précédent, et des variations de l'énergie cinétique du véhicule automobile.

7. Procédé selon la revendication 6, dans lequel le bilan énergétique comprend en outre une fraction d'énergie qui dépend de la résistance à l'air et/ou de la résistance au roulement.

8. Procédé selon l'une des revendications précédentes, dans lequel les critères cibles prédéterminés comprennent des critères cibles qui comprennent une mesure d'un rendement énergétique, une mesure d'une maniabilité (confort de conduite) et une mesure d'un respect d'une vitesse de consigne.

9. Procédé selon l'une des revendications précédentes, dans lequel la détermination des coûts de changement d'état en fonction des variations d'énergie déterminées comprend au moins l'une des autres fractions de coûts suivantes :

   a) une fraction de coût qui dépend d'un nombre de processus de changement de vitesse ;
   b) une fraction de coût pour un écart de vitesse par rapport à une vitesse de consigne, et
   c) une fraction de coût pour un écart entre la vitesse à la fin du tronçon de route précédent et une vitesse finale de consigne.

10. Procédé selon l'une des revendications précédentes, dans lequel la détermination des coûts de changement d'état en fonction des variations d'énergie déterminées est effectuée au moins en partie à l'avance ou au début du déplacement et est stockée dans le véhicule automobile.

11. Procédé selon l'une des revendications précédentes, dans lequel l'étape de détermination de coûts de changement d'état pour des transitions d'état de déplacement possibles à l'intérieur de l'espace de recherche comprend le calcul de coûts de changement d'état pour un changement de vitesse d'un rapport initial à une nouveau rapport, en calculant et en sommant les coûts de changement d'état pour la transition du rapport initial au point mort et les coûts de changement d'état du point mort au nouveau rapport.

12. Dispositif (1) pour la détermination, pour un tronçon de route précédent, d'une courbe optimale, par rapport à des critères cibles prédéterminés, de vitesse et de changement de vitesse associé d'un véhicule automobile, à régler de manière automatisée sur un tronçon de route précédent, le dispositif étant conçu pour

   - déterminer un espace de recherche discret (10) qui indique des courbes possibles d'états de déplacement (14) du véhicule automobile le long d'un tronçon de route (12) précédent, un état de déplacement (14) étant défini par une vitesse et le changement de vitesse associé du véhicule automobile ;
   - déterminer des coûts de changement d'état pour des transitions d'état de déplacement possibles à l'intérieur de l'espace de recherche ; et
   - déterminer une courbe (17) optimale, par rapport aux coûts de changement d'état déterminés, des états de déplacement (14) à l'intérieur de l'espace de recherche (10) déterminé pour le tronçon de route (12) précédent ; **caractérisé en ce que** le dispositif (1) est en outre conçu pour
   - déterminer une énergie cinétique du véhicule automobile pour chaque état de déplacement à l'intérieur de l'espace de recherche (S21) ; et
   - déterminer respectivement une variation d'énergie pour les transitions d'état de déplacement possibles à l'intérieur de l'espace de recherche (S23), la variation d'énergie indiquant une variation d'énergie du véhicule automobile lors d'un changement entre deux états de déplacement ; et
   - déterminer les coûts de changement d'état en fonction des variations d'énergie déterminées (S24).

13. Véhicule automobile, en particulier véhicule utilitaire, comprenant un dispositif (1) selon la revendication 12.

FIG. 1

FIG. 2

FIG. 3

<u>10</u>

FIG. 4

50

Zustand

Drehmoment

Volllastmoment

be_min-
Moment

$N_{min}$    $N_{max}$

Schleppmoment

Bremsmoment

Drehmoment

51

real

linearisiert

52b

53

52a    52

Kraftstoffmassenstrom

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012013695 A1